# EUROPÄISCHE PATENTANMELDUNG

(11) **EP 2 165 984 A1**
(43) Veröffentlichungstag der Anmeldung: **24.03.2010**
(21) Anmeldenummer: 08016435.3
(22) Anmeldetag: 18.09.2008
(51) Int. Cl.: C03B 37/04

(54) **Zerfaserungsvorrichtung zur Herstellung von Glaswolle**

(71) Anmelder: SCHWENK Dämmtechnik GmbH & Co KG, 86899 Landsberg (DE)
(72) Erfinder: Tenzler, Thomas, Dr., 86836 Untermeitingen (DE)
(74) Vertreter: HOFFMANN EITLE

(57) **Zusammenfassung**

Zerfaserungsvorrichtung zur Herstellung von Glasfasern für Glaswolle mit einem hohlen Schleuderrad (1), das zu zerfaserndes Material aufnehmen und sich um eine Achse (A) drehen kann, wobei das Schleuderrad (1) eine Vielzahl von Öffnungen in einer Umfangswand (1') aufweist, durch die das Material aufgrund der Drehung des Schleuderrads (1) austreten und dadurch Fasern erzeugen kann, wenigstens einen ringförmigen Brenner (2), der eingerichtet ist, einen heißen Gasstrom in Richtung auf die Fasern zu erzeugen, um die Fasern in einem viskosen Zustand zu halten und aus dem Schleuderrad (1) zu ziehen, wenigstens ein Gebläse (3), das eingerichtet ist, einen Fluidstrom, vorzugsweise einen Luftstrom, zu erzeugen und auf die Fasern zu richten, um die austretenden Fasern abzulenken, **dadurch gekennzeichnet, dass** das Gebläse (3) einen vorgewärmten Fluidstrom ausbläst. Verfahren zur Herstellung von Glasfasern, bei dem in einem Schritt der Fluidstrom vor dem Auftreffen auf die Fasern vorgewärmt wird.

## Beschreibung

### TECHNISCHES GEBIET

Die Erfindung betrifft eine Zerfaserungsvorrichtung und ein Verfahren zur Herstellung von Glasfasern im Besonderen zur Verwendung in Glaswolle.

### STAND DER TECHNIK

Ein gängiges Verfahren zur Herstellung von Mineralwolle aus Glasfasern verwendet eine sich drehende, kreisrunde, Siebförmige Trommel, in welche die Schmelze aus Glas oder Stein eingebracht und ausgeschleudert wird. Es entsteht ein Faservlies, das auf einem Band durch einen Härteofen transportiert wird.

Für das Ausbilden der Glasfasern weist der Stand der Technik einen ringförmigen Brenner auf, der einen heißen Gasstrom in Richtung auf die austretenden Fasern erzeugt. Der heiße Gasstrom reißt die Fasern mit und hält sie in einem formbaren, viskosen Zustand. Ferner sind aus dem Stand der Technik Gebläse bekannt, die zusätzlich zum Brenner in radialer Richtung neben dem siebförmigen Schleuderrad angeordnet sind und einen auf die Fasern gerichteten Fluidstrom, vorzugsweise einen Luftstrom, erzeugen (vgl. hierzu beispielsweise die WO 2006/095231 A1). Mittels des Fluidstroms lassen sich die Fasereigenschaften beeinflussen. Insbesondere kann eine Verdünnung der Faserdurchmesser erzielt werden.

Der heiße Luftstrom gewährleistet die Verformbarkeit der Fasern nach dem Austreten. Allerdings ist das Zeitfenster, in dem die Fasern viskos, d.h. formbar sind, klein. In diesem kurzen Zeitraum werden die Fasern gebildet, bevor sie abreißen und auf das Transportband fallen. Auf der einen Seite ist eine Vergrößerung dieses Zeitfensters wünschenswert, um dünnere Fasern herstellen und die Faserstruktur besser beeinflussen zu können, auf der anderen Seite hat eine Erhöhung der Temperatur des Gasstroms aus dem Brenner eine schlechtere Energieeffizienz der Vorrichtung zur Folge.

### ZUSAMMENFASSUNG DER ERFINDUNG

Es ist daher eine Aufgabe der vorliegenden Erfindung, eine Zerfaserungsvorrichtung und ein Verfahren zur Herstellung von Glaswolle aus Glasfasern mit verbesserter Energieeffizienz anzugeben.

Die Aufgabe wird mit den Merkmalen der Ansprüche 1 und 5 gelöst. Vorteilhafte Ausgestaltungen folgen aus den Unteransprüchen.

Die erfindungsgemäße Zerfaserungsvorrichtung weist ein hohles Schleuderrad auf, das zu zerfaserndes Material, vorzugsweise Schmelze aus Glas, aufnehmen und sich um eine Achse drehen kann, wobei das Schleuderrad eine Vielzahl von Öffnungen in einer Umfangswand aufweist, durch die das Material aufgrund der Drehung des Schleuderrads austritt. Durch den Austritt aus den Öffnungen bilden sich Glasfasern, die mittels eines heißen Gasstroms auf einer Temperatur gehalten werden, in der sich die Fasern formen lassen. Der heiße Gasstrom wird vorzugsweise mittels eines ringförmigen Brenners erzeugt, der den Gasstrom auf den Austrittsbereich richtet. Der Gasstrom verläuft im Wesentlichen in axialer Richtung des Schleuderrads und entlang der Umfangswand mit den Öffnungen.

Durch die Strömungsgeschwindigkeit des heißen Gases werden die Glasfasern mitgerissen und deren Durchmesser wird verdünnt, bis sie bei einer kritischen Länge abreißen und auf ein Transportband fallen.

Ferner ist ein Gebläse vorgesehen, das einen Fluidstrom, vorzugsweise einen Luftstrom, erzeugt und auf die Fasern richtet, um den Durchmesser der Fasern weiter zu verringern. Der Fluiddruck und/oder die Fluidrichtung sind vorzugsweise einstellbar. Das Gebläse ist in radialer Richtung seitlich neben dem Schleuderrad vorgesehen und richtet den Fluidstrom im Wesentlichen auf das Schleuderrad. Dadurch erfahren die Fasern in der radialen Schleuderrichtung einen Widerstand. Die Fasern werden in radialer Richtung durch den Fluidstrom abgebremst, wodurch das Zeitfenster, in dem die Fasern verformbar bleiben, vergrößert wird. Die resultierende Stromrichtung aus dem heißen Gasstrom und dem Fluidstrom aus dem Gebläse ist nach unten gerichtet und reißt die Fasern aus den Öffnungen mit.

Um der Abkühlung der Fasern durch den resultierenden Strom entgegenzuwirken, ist die Erfindung **dadurch gekennzeichnet, dass** das Gebläse einen vorgewärmten Fluidstrom ausbläst. Dadurch kann die Faserabkühlung verzögert und das Zeitfenster, in dem die Glasfasern viskos, d. h. verformbar sind, vergrößert werden. Dadurch lässt sich eine Steuerung der Faserstruktur, d. h. Länge und Durchmesser, verbessern, und/oder es kann die notwendige Temperatur zum Heizen des oberen Gasstroms aus dem Brenner verringert werden, was sich positiv auf die Energieeffizienz der Vorrichtung auswirkt.

Vorzugsweise wird der Fluidstrom mittels eines Wärmetauschers zwischen einem Kompressor zur Erzeugung von Druckluft und einer Düse, durch welche die Druckluft austritt, vorgewärmt, damit sich der Fluidstrom bis zum Auftreffen auf die Fasern möglichst wenig abkühlt.

Vorzugsweise wird zum Vorwärmen des Fluidstroms Prozessabwärme, vorzugsweise Abwärme aus Schmelzwannen und/oder der Kompressoren verwendet, wodurch keine oder weniger zusätzliche Energie für das Vorwärmen der Druckluft aufgebracht werden muss.

Vorzugsweise wird der Fluidstrom auf 200°C bis 300°C vorgewärmt, da dadurch ein guter Kompromiss aus Formbarkeit der Glasfasern und Energieeffizienz erzielt wird.

Die Aufgabe wird ferner durch ein Verfahren zur Herstellung von Glasfasern nach Anspruch 5 gelöst. Das Verfahren kann eine erfindungsgemäße Vorrichtung verwenden. Danach wird Schmelze in ein hohles Schleuderrad, das sich um eine Achse drehen kann, eingebracht, wobei das Schleuderrad eine Vielzahl von Öffnungen in einer Umfangswand aufweist. In einem weiteren Verfahrensschritt wird das Schleuderrad gedreht, so dass das Material aufgrund der Drehung des Schleuderrads aus den Öffnungen austritt und dadurch Fasern erzeugt werden. Ferner wird ein heißer Gasstrom erzeugt und auf die austretenden Fasern gerichtet, wodurch die Fasern auf einer Temperatur gehalten werden, bei der diese formbar bleiben. Ein Fluidstrom wird in einem weiteren Verfahrensschritt auf die Fasern gerichtet, um diese abzulenken. Die Ablenkung erfolgt vorzugsweise im Wesentlichen entgegen der radialen Austrittsrichtung. Das Verfahren ist durch einen Schritt gekennzeichnet, bei dem der Fluidstrom vor dem Auftreffen auf die Fasern vorgewärmt wird. Die technischen Wirkungen der Verfahrensschritte sind oben zusammen mit der Beschreibung der Vorrichtung ausgeführt.

### BESTE WEGE ZUR AUSFÜHRUNG DER ERFINDUNG

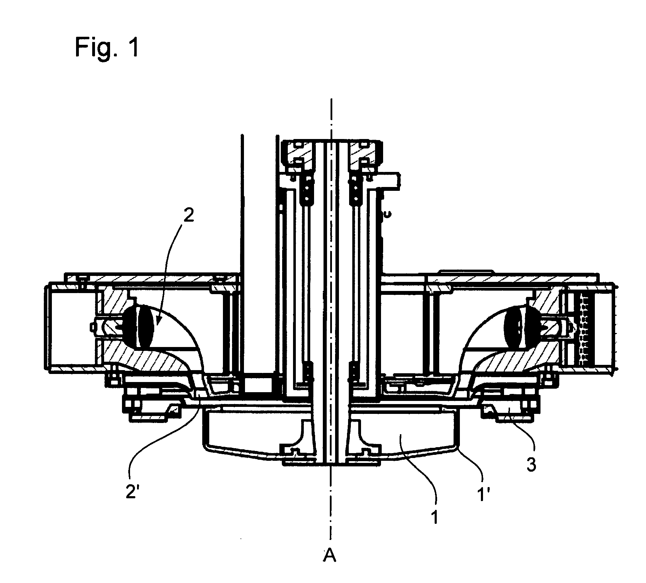

Fig. 1 zeigt eine schematische Schnittansicht einer erfindungsgemäßen Zerfaserungsvorrichtung. Referenzzeichen 1 bezeichnet ein hohles Schleuderrad, in das heiße Glasschmelze eingebracht wird. Das Schleuderrad 1 ist um die Drehachse A drehbar, wodurch bei Drehung des Schleuderrads 1 Schmelze aus Glas, die in das Schleuderrad 1 eingebracht wird, an die Wand 1' des Schleuderrads 1 geschleudert wird. In der Wand 1' des Schleuderrads 1 ist eine Vielzahl von Öffnungen eingebracht, durch die das Material austreten kann. Die Zentrifugalkraft, die bei der Drehung des Schleuderrads 1 auf die Schmelze wirkt, drückt diese nach außen, wodurch Fasern aus den Öffnungen heraustreten.

Beim Austreten der Fasern werden diese von einem heißen Gasstrom erfasst, der von einem ringförmigen Brenner 2 erzeugt wird und der aus einer Öffnung 2' in axialer Richtung oberhalb und in radialer Richtung außerhalb des Schleuderrads 1 angeordnet ist.

Je nach Strömungsgeschwindigkeit des heißen Gases werden die Fasern mehr oder weniger stark nach unten abgelenkt. Um zu verhindern, dass sich die Fasern aufgrund ihrer radialen Geschwindigkeit schnell aus dem Bereich des heißen Gasstroms herausbewegen, und um die Bewegungsrichtung, Bewegungsgeschwindigkeit, Temperatur und damit die Struktur der Fasern zu beeinflussen, ist in radialer Richtung neben dem Schleuderrad 1 ein vorzugsweise ringförmiges Gebläse 3 vorgesehen. Das ringförmige Gebläse 3 weist in Umfangsrichtung Düsen auf, aus denen ein Luftstrom austritt, der einstellbar ist und im Wesentlichen in radialer Richtung auf die Fasern gerichtet ist. Dadurch wird das Zeitfenster, in dem die Fasern viskos bzw. formbar sind, vergrößert.

Der Luftstrom aus dem Gebläse 3 wird vorgewärmt. Das Vorwärmen des Fluidstroms kann mittels eines Wärmetauschers zwischen einem Kompressor zur Erzeugung von Druckluft und den Düsen, durch welche die Druckluft austritt, erzielt werden. Um keine oder weniger zusätzliche Energie zum Anheizen der Druckluft aufbringen zu müssen, wird vorzugsweise Prozesswärme, beispielsweise Abwärme, aus Schmelzwannen und/oder Kompressoren verwendet.

## Patentansprüche

1. Zerfaserungsvorrichtung mit
einem hohlen Schleuderrad (1), das zu zerfaserndes Material aufnehmen und sich um eine Achse (A) drehen kann, wobei das Schleuderrad (1) eine Vielzahl von Öffnungen in einer Umfangswand (1') aufweist, durch die das Material aufgrund der Drehung des Schleuderrads (1) austreten und **dadurch** Fasern erzeugen kann,
wenigstens einen ringförmigen Brenner (2), der eingerichtet ist, einen heißen Gasstrom in Richtung auf die Fasern zu erzeugen, um die Fasern in einem viskosen Zustand zu halten und aus dem Schleuderrad (1) zu ziehen,
wenigstens ein Gebläse (3), das eingerichtet ist, einen Fluidstrom, vorzugsweise einen Luftstrom, zu erzeugen und auf die Fasern zu richten, um die austretenden Fasern abzulenken,
**dadurch gekennzeichnet, dass**
das Gebläse (3) einen vorgewärmten Fluidstrom ausbläst.

2. Zerfaserungsvorrichtung nach Anspruch 1, **dadurch gekennzeichnet, dass** der Fluidstrom mittels eines Wärmetauschers zwischen einem Kompressor zur Erzeugung von Druckluft und einer Düse, durch welche die Druckluft austreten kann, vorgewärmt wird.

3. Zerfaserungsvorrichtung nach Anspruch 1 oder 2, **dadurch gekennzeichnet, dass** zum Vorwärmen des Fluidstroms Prozessabwärme, vorzugsweise Abwärme einer Schmelzwanne und/oder eines Kompressors, verwendet wird.

4. Zerfaserungsvorrichtung nach einem der vorhergehenden Ansprüche, **dadurch gekennzeichnet, dass** der Fluidstrom auf 200°C bis 300°C vorgewärmt wird.

5. Verfahren zur Herstellung von Glasfasern mit folgenden Schritten:
- Einbringen von Schmelze in ein hohles Schleuderrad (1), das sich um eine Achse (A) drehen kann, wobei das Schleuderrad (1) eine Vielzahl von Öffnungen in einer Umfangswand (1') aufweist,
- Drehen des Schleuderrads (1), so dass das Material aufgrund der Rotation des Schleuderrads (1) aus den Öffnungen heraustritt und **dadurch** Fasern erzeugt werden,
- Erzeugen eines heißen Gasstroms in Richtung auf die austretenden Fasern, wodurch die Fasern in einem viskosen Zustand gehalten und aus dem Schleuderrad (1) gezogen werden,
- Erzeugen eines Fluidstroms, vorzugsweise eines Luftstroms, der auf die Fasern gerichtet ist, um die austretenden Fasern abzulenken,
**dadurch gekennzeichnet, dass** in einem weiteren Schritt der Fluidstrom vor dem Auftreffen auf die Fasern vorgewärmt wird.
